(19) Europäisches Patentamt / European Patent Office / Office européen des brevets

(11) **EP 4 012 972 A1**

(12) **DEMANDE DE BREVET EUROPEEN**

(43) Date de publication:
**15.06.2022 Bulletin 2022/24**

(21) Numéro de dépôt: **21214488.5**

(22) Date de dépôt: **14.12.2021**

(51) Classification Internationale des Brevets (IPC):
**H04L 9/08** *(2006.01)* **H04L 9/30** *(2006.01)*

(52) Classification Coopérative des Brevets (CPC):
**H04L 9/0861; H04L 9/30**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **14.12.2020 FR 2013204**

(71) Demandeur: **Commissariat à l'énergie atomique et aux énergies alternatives**
**75015 Paris (FR)**

(72) Inventeur: **HENNEBERT, Christine**
**38054 Grenoble Cedex 09 (FR)**

(74) Mandataire: **Brevalex**
**56, Boulevard de l'Embouchure**
**B.P. 27519**
**31075 Toulouse Cedex 2 (FR)**

(54) **MÉTHODE DE DIVULGATION SÉLECTIVE DE DONNÉES VIA UNE CHAINE DE BLOCS**

(57) La présente invention concerne une méthode de divulgation sélective de données confidentielles d'un premier utilisateur à un second utilisateur d'une chaine de blocs (450). Le premier utilisateur est équipé d'un portefeuille de clés hiérarchique déterministe (410) et sélectionne une feuille de l'arborescence du portefeuille comme compte émetteur. Une clé secrète est dérivée à partir du code de chaine de ce compte émetteur et les données à divulguer sont chiffrées à l'aide cette clé secrète. Le premier utilisateur transmet, au moyen d'une première transaction, les données ainsi chiffrées à un contrat in-telligent (430) qui les stocke dans la chaine de blocs. Il transmet au moyen d'une seconde transaction un crédit d'accès au contrat intelligent qui le stocke en relation avec le couple formé par le compte émetteur du premier utilisateur et le compte récepteur du second utilisateur. Le second utilisateur transmet une troisième transaction au contrat intelligent à partir de son compte récepteur (420). Si le crédit n'est pas nul, le contrat intelligent met à disposition du compte récepteur les données chiffrées stockées dans la chaine de blocs en relation avec le compte émetteur du premier utilisateur.

EP 4 012 972 A1

**Description**

**DOMAINE TECHNIQUE**

La présente invention concerne le domaine général des chaines de blocs (*blockchains*) et plus particulièrement celui des portefeuilles hiérarchiques déterministes de clés secrètes permettant d'émettre des transactions vers une chaine de blocs.

**ÉTAT DE LA TECHNIQUE ANTÉRIEURE**

La génération d'un canal sécurisé entre dispositifs distants, également dénommés dans la suite « pairs », suppose le partage d'une clé secrète entre ces dispositifs. Ce partage peut être réalisé par une distribution manuelle des clés, préalablement à toute communication sur le canal, ou bien au moyen d'un protocole d'échange de clés de type Diffie-Hellmann utilisant un cryptosystème asymétrique.

On rappelle que dans un protocole d'échange de clés de type Diffie-Hellman (désigné ci-après par D-H), chaque dispositif distant dispose d'un couple de clés asymétrique (clé privée, clé publique). La clé privée d'un dispositif émetteur est conservée secrète par ce dernier et n'est en particulier jamais divulguée au dispositif destinataire. Elle sert à chiffrer ou signer des messages et à identifier le dispositif émetteur. En revanche, la clé publique est connue du dispositif destinataire et sert à déchiffrer des messages ou à vérifier la signature du dispositif émetteur. Le but du protocole d'échange de clés est de permettre, à partir d'éléments publics d'un cryptosystème échangés sur un canal non sécurisé, à chaque dispositif distant de calculer indépendamment une même clé secrète qui servira à établir un canal sécurisé entre eux.

Une limitation importante du protocole d'échange de clés mentionné ci-dessus est qu'il n'est pas immunisé contre une attaque de type Man-In-the-Middle. Il est toutefois connu pour remédier à ce type d'attaques d'identifier l'émetteur de chaque clé publique au moyen d'une signature par un tiers de confiance (certificat numérique au format X.509 par exemple).

Afin d'éviter de recourir à un tiers de confiance, et en particulier, à une autorité de certification centralisée, il a été proposé dans la demande de brevet FR-A-3076420 de faire appel à une chaine de blocs, adaptée à stocker des contrats intelligents (de type Ethereum) dans un registre distribué (*ledger*). L'échange de clés entre pairs, de type D-H, est alors réalisé au moyen d'un contrat intelligent auprès duquel les pairs ont été préalablement déclarés. Les deux pairs peuvent ensuite communiquer de manière confidentielle au moyen d'un canal sécurisé par la clé secrète partagée, calculée à partir des clés échangées.

Toutefois, la génération de la clé secrète partagée ne dispense pas les pairs d'un échange de clés de type D-H, même si celui-ci est intermédié par le contrat intelligent. En outre, lorsqu'un utilisateur de la chaine de blocs souhaite échanger avec une pluralité de pairs de manière sélective, il doit générer autant de clés que de pairs, calculer et stocker les clés générées par le protocole D-H, ce qui est généralement inadapté à un environnement embarqué (notamment pour des nœuds IoT) en raison des faibles ressources en mémoire et en calcul des objets connectés. En outre le stockage permanent de clés dans un portefeuille de clés est préjudiciable à la sécurité. Enfin, si cette méthode de génération de clé secrète partagée entre pairs est bien adaptée à une communication confidentielle sur un canal auxiliaire, elle l'est beaucoup moins lorsqu'il s'agit de divulguer sélectivement des informations confidentielles à un tiers en les stockant dans le registre distribué lui-même.

La présente invention a par conséquent pour objet de permettre une divulgation sélective d'informations entre pairs via une chaine de blocs qui ne nécessite pas de protocole d'échange complexe d'éléments cryptographiques ni de stockage permanent de clés.

**EXPOSÉ DE L'INVENTION**

La présente invention est définie par une méthode de divulgation sélective de données par un premier utilisateur d'une chaine de blocs à un second utilisateur de cette chaine de blocs, le premier utilisateur étant équipé d'un portefeuille de clés hiérarchique déterministe organisé selon structure arborescente à partir d'une clé maîtresse, caractérisée en ce que :

a) le premier utilisateur sélectionne une feuille de la structure arborescente comme compte émetteur, ladite feuille étant identifiée par un chemin dans l'arborescence, le compte émetteur étant associé à une clé privée, $k_{leaf}$, une clé publique correspondante, $PK_{leaf}$, une adresse de compte émetteur, $add_{leaf}$, obtenue par hachage de la clé publique et un code de chaine, $CCK_{leaf}$ ;

b) le premier utilisateur chiffre lesdites données au moyen d'une clé secrète obtenue à partir du code de chaine, $CCK_{leaf}$ ;

c) le premier utilisateur transmet une première transaction à partir de son adresse de compte émetteur $add_{leaf}$, à un contrat intelligent déployé sur la chaine de blocs, la première transaction ayant pour argument les données ainsi chiffrées ainsi qu'un appel à une première fonction du contrat intelligent ;

d) la première fonction du contrat intelligent stocke dans la chaine de blocs les données ainsi chiffrées en relation avec l'adresse de compte émetteur du premier utilisateur, $add_{leaf}$ ;

e) le premier utilisateur transmet au dit contrat intelligent, une seconde transaction à partir de son adresse de compte émetteur, $add_{leaf}$, la seconde transaction ayant pour argument l'adresse de compte du second utilisateur, un jeton d'accès, ainsi qu'un appel à une seconde fonction du contrat intelligent ;

f) la seconde fonction du contrat intelligent stocke dans la chaine de blocs le crédit d'accès en relation avec le couple formé par l'adresse de compte émetteur du premier utilisateur et l'adresse de compte récepteur du second utilisateur ;

g) le second utilisateur transmet au dit contrat intelligent, une troisième transaction, à partir de son adresse de compte récepteur, la troisième transaction ayant pour argument l'adresse du compte émetteur du premier utilisateur ainsi qu'un appel à une troisième fonction du contrat intelligent ;

h) la troisième fonction du contrat intelligent vérifie que le jeton d'accès stocké en relation avec le couple formé par l'adresse de compte émetteur du premier utilisateur et l'adresse de compte récepteur du second utilisateur est valide et, dans ce cas, retourne à l'adresse de compte récepteur du second utilisateur, les données chiffrées stockées en relation avec l'adresse de compte émetteur du premier utilisateur, $add_{leaf}$.

En outre, le premier utilisateur peut transmettre au second utilisateur l'adresse du compte émetteur, $add_{leaf}$. Cette clé secrète peut être transmise au second utilisateur via un canal auxiliaire sécurisé, par exemple une communication NFC ou une communication par ultrasons.

La clé secrète peut être identique au code de chaine, $CCK_{leaf}$.

Après l'étape (h), le second utilisateur peut déchiffrer les données chiffrées avec la clé secrète reçue via le canal auxiliaire sécurisé

A l'étape (c), le premier utilisateur signe la première transaction avec la clé privée $k_{leaf}$ et à l'étape (d), la première fonction du contrat intelligent vérifie à l'aide de cette signature si la première transaction a bien été émise par l'adresse de compte émetteur du premier utilisateur, $add_{leaf}$, les données chiffrées n'étant stockées dans la chaine de blocs que si cette vérification est positive.

De même, à l'étape (e), le premier utilisateur signe la seconde transaction avec la clé privée $k_{leaf}$ et à l'étape (f), la seconde fonction du contrat intelligent vérifie à l'aide de cette signature si la seconde transaction a bien été émise par l'adresse de compte émetteur du premier utilisateur, $add_{leaf}$, le jeton d'accès n'étant stocké dans la chaine de blocs que si cette vérification est positive.

Enfin, à l'étape (g), le second utilisateur signe la troisième transaction avec la clé privée associée à son compte récepteur et à l'étape (h), la troisième fonction du contrat intelligent vérifie à l'aide de cette signature si la troisième transaction a bien été émise par l'adresse de compte récepteur du second utilisateur, les données chiffrées n'étant mises à disposition de cette adresse que si cette vérification est positive.

A l'étape (h) le jeton d'accès est invalidé par la troisième fonction du contrat intelligent après que les données chiffrées ont été transmises à l'adresse de compte récepteur du second utilisateur.

Avantageusement, à l'étape (c), la première transaction comprend en outre ledit chemin dans l'arborescence en argument et que celui est stocké dans la chaine de blocs par le contrat intelligent.

A l'étape (e), la seconde transaction comporte en outre un index en argument, le jeton d'accès étant stocké à l'étape (f) en relation avec le couple du compte émetteur du premier utilisateur et du compte récepteur du second utilisateur, d'une part, et dudit index, d'autre part.

A l'étape (h), la troisième fonction du contrat intelligent vérifie que le jeton d'accès stocké en relation, d'une part, avec le couple formé par l'adresse de compte émetteur du premier utilisateur et l'adresse de compte récepteur du second utilisateur, et d'autre part, avec ledit index, est valide, ladite troisième fonction mettant à disposition de l'adresse du compte récepteur du second utilisateur, les données chiffrées stockées en relation avec l'adresse de compte émetteur du premier utilisateur, $add_{leaf}$, et ledit index.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

La Fig. 1, déjà décrite, représente de manière schématique la structure d'un portefeuille de clés de type hiérarchique déterministe ;

Les Fig. 2A et 2B illustrent de manière schématique une première et une seconde méthode de génération connue de clés privées dans un portefeuille de clés de type hiérarchique déterministe ;

La Fig. 3 représente de manière schématique les éléments cryptographiques d'un compte feuille d'un portefeuille de clés de type hiérarchique déterministe ;

La Fig. 4 représente les échanges intervenant dans la méthode de divulgation sélective entre utilisateurs d'une chaine de blocs, selon un mode de réalisation de la présente invention ;

La Fig. 5 représente l'ordinogramme d'une méthode de divulgation sélective d'information entre utilisateurs d'une chaine de blocs, selon un mode de réalisation de la présente invention.

## EXPOSÉ DÉTAILLÉ DE MODES DE RÉALISATION PARTICULIERS

L'idée à la base de la présente invention est de tirer profit de la construction d'un portefeuille de clés hiérarchique déterministe et plus particulièrement du code de chaine associé à une feuille de l'arborescence de clés pour générer une clé de chiffrement.

On rappelle que les utilisateurs d'une chaine de blocs peuvent émettre des transactions de leurs comptes respectifs (selon la terminologie Ethereum) ou de leurs adresses respectives (selon la terminologie Bitcoin).

Chaque compte d'un utilisateur est associé à un couple de clé publique-clé privée d'un cryptosystème asymétrique, généralement un cryptosystème sur courbe elliptique, l'identifiant du compte étant obtenu par hachage de la clé publique en question. La clé privée est connue de l'utilisateur seul.

Lorsque l'utilisateur veut transmettre une transaction à la chaîne de blocs à partir de l'un de ses comptes, il la signe avec sa clé privée, par exemple au moyen de l'algorithme ECDSA (Elliptic Curve Digital Signature Algorithm). Disposant de la clé publique, chacun peut alors vérifier que la transaction a bien été signée par le titulaire du compte à partir duquel est émise la transaction signée.

En règle générale, un utilisateur possède une pluralité de comptes, chaque compte étant associé de manière unique à un couple de clé privée - clé publique. Un utilisateur dispose par conséquent d'un ensemble de clés privées, encore dénommé portefeuille de clés ou plus simplement portefeuille.

On distingue classiquement les portefeuilles non déterministes (ou aléatoires) des portefeuilles déterministes.

Dans un portefeuille non déterministe, aussi connu sous l'acronyme JBOK (Just a Bunch Of Keys), les clés sont générées de manière aléatoire. Ce type de portefeuille n'est pas structuré et sa gestion est donc complexe. En outre, la maintenance du portefeuille implique d'effectuer des opérations de sauvegarde relativement lourdes.

Pour remédier à ces difficultés, on a généralement recours à des portefeuilles hiérarchiques déterministes dans lesquels toutes les clés privées sont générées, de manière arborescente, à partir d'un même germe. Autrement dit, la connaissance du germe permet de retrouver l'ensemble des clés privées du portefeuille.

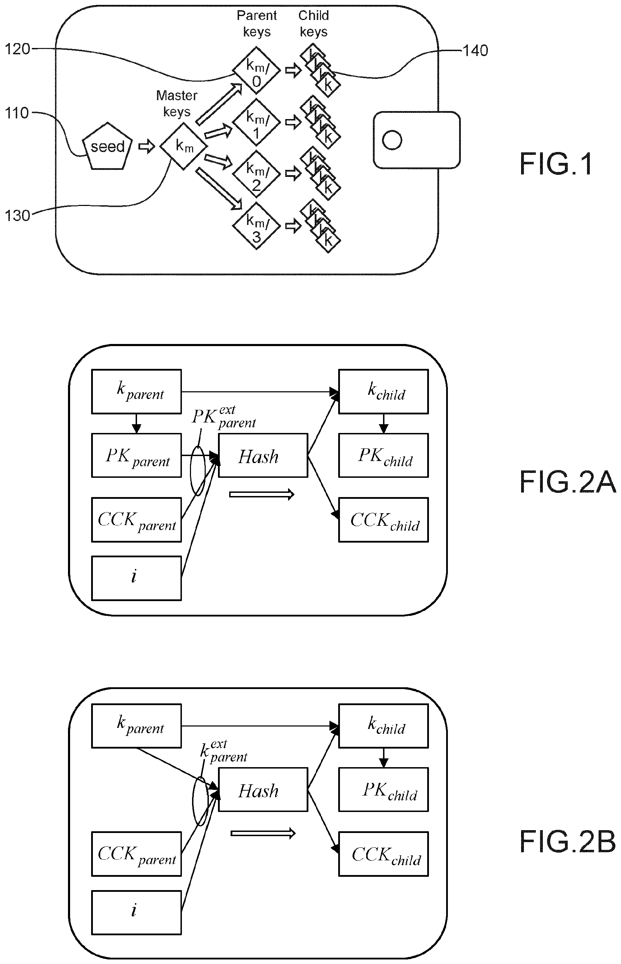

La Fig. 1 représente de manière schématique la structure d'un tel portefeuille hiérarchique déterministe.

Le germe, 110, à l'origine du portefeuille de clés est un nombre aléatoire (ou entropie), par exemple sur 128 ou 256 bits. Il est généralement représenté par un code mnémonique constitué de 12 ou 24 mots tirés d'un dictionnaire prédéterminé comportant un nombre de mots prédéterminé (2048).

Le germe est ensuite haché (par exemple au moyen la fonction de hachage HMAC-SHA 512), pour fournir d'une part une clé privée maîtresse, 120, ($k_m$) et un code de chaîne associé (non représenté).

La clé publique maîtresse est ensuite calculée à partir de la clé privée maîtresse au moyen de $PK_m = k_m.G$ où $G$ est le point générateur de la courbe elliptique.

A chaque génération, on obtient à partir d'une clé privée parent, 130, du code de chaîne associée à cette clé et d'un numéro d'index, $i$, une clé privée enfant, 140, de rang de naissance $i+1$ (le premier enfant correspondant à l'indice nul). La génération de la clé privée fait intervenir une fonction de hachage (ou une combinaison de fonctions de hachage) interdisant de pouvoir remonter à une clé privée parent à partir de la clé privée d'un enfant.

La génération des clés privées dans un portefeuille hiérarchique déterministe peut être réalisée selon différentes méthodes.

La Fig. 2A représente une première méthode de génération de clés privées dans un portefeuille hiérarchique déterministe.

On a représenté à gauche de la figure les éléments relatifs à une clé privée parent et à droite ceux relatifs à une clé privée enfant, issue de cette clé privée parent.

La clé privée parent, $k_{parent}$, permet tout d'abord de générer la clé publique correspondante du cryptosystème asymétrique, par exemple $PK_{parent} = k_{parent}G$ dans le cas d'un cryptosystème sur courbe elliptique.

La clé publique parent $PK_{parent}$ est concaténée à code de chaine, $CCK_{parent}$, associée pour former une clé publique étendue $PK_{parent}^{ext} = PK_{parent}\big|CCK_{parent}$. Cette clé publique étendue est combinée avec l'index, $i$, de la clé enfant que l'on souhaite générer, puis l'ensemble est haché au moyen d'une fonction de hachage, *Hash*.

Le résultat du hachage est divisé en une partie gauche et une partie droite. La partie gauche est combinée avec la clé privée parent, $k_{parent}$, pour donner la clé privée enfant, $k_{child}$ tandis que la partie droite donne le code de chaine associé à la clé enfant, soit $CCK_{child}$. La clé privée enfant, $k_{child}$, permet de générer la clé publique enfant, $PK_{child} = k_{child}G$.

On dispose par conséquent des éléments $k_{child}, PK_{child}, CCK_{child}$ permettant d'itérer une nouvelle fois la génération de clés privées.

L'opération de génération permettant de passer d'une clé privée parent à une clé enfant d'indice $i$ est notée ici $CKD_{priv}^n$. Autrement dit :

$$k_{child} = CKD_{priv}^n \left( k_{parent}, i \right) \qquad (1)$$

et donc, par récurrence :

$$k_{child} = CKD_{priv}^n \left( ...CKD_{priv}^n \left( CKD_{priv}^n \left( k_m, i_1 \right), i_2 \right), ..., i_N \right) \qquad (2)$$

où $N$ est la longueur du chemin dans l'arborescence à compter du germe, et où $i_1,...,i_N$ est la succession des indices des clés enfants le long du chemin.

La Fig. 2B représente une seconde méthode de génération de clés privées dans un portefeuille hiérarchique déterministe.

Cette méthode de génération, dite renforcée (*hardened*), par opposition à la méthode précédente, dite normale, utilise une clé privée étendue au lieu d'une clé publique étendue pour générer une clé privée de la génération suivante. Elle est *a priori* plus robuste que la méthode normale puisqu'elle omet du calcul une information publique.

Comme précédemment, on a représenté à gauche de la figure les éléments relatifs à une clé privée parent et à droite ceux relatifs à une clé privée enfant, issue de cette clé privée parent.

La clé privée parent, $k_{parent}$, est concaténée avec le code de chaine associé pour former une clé privée étendue $k_{parent}^{ext} = k_{parent} \big| CCK_{parent}$.

Cette clé privée étendue est combinée avec l'indice, $i$, de la clé enfant que l'on souhaite générer, puis l'ensemble est haché au moyen d'une fonction de hachage, *Hash*.

Le résultat du hachage est divisé en une partie gauche et une partie droite. La partie gauche est combinée comme précédemment avec la clé privée parent, $k_{parent}$, pour donner la clé privée enfant, $k_{child}$ tandis que la partie droite donne le code de chaine associée à la clé enfant, soit $CCK_{child}$. La clé privée enfant, $k_{child}$, permet à son tour de générer la clé publique enfant, $PK_{child} = k_{child}G$.

L'opération de génération permettant de passer d'une clé privée parent à une clé enfant d'indice $i$ est appelée opération de génération renforcée et notée $CKD_{priv}^h$ Autrement dit :

$$k_{child} = CKD_{priv}^h \left( k_{parent}, i \right) \qquad (3)$$

Si l'on n'utilise que des opérations de génération renforcée, on obtient par récurrence :

$$k_{child} = CKD_{priv}^h \left( ...CKD_{priv}^h \left( CKD_{priv}^h \left( k_m, i_1 \right), i_2 \right), ..., i_N \right) \qquad (4)$$

où, comme précédemment $N$ est la longueur du chemin dans l'arborescence à compter du germe, et où $i_1,...,i_N$ est la succession des indices des clés enfants le long du chemin.

On notera que la génération d'une clé privée du portefeuille peut faire intervenir successivement des opérations de génération normale et des opérations de génération renforcée le long du chemin. Ainsi, plus généralement, cette clé privée sera obtenue par :

$$k_{child} = CKD_{priv} \left( ...CKD_{priv} \left( CKD_{priv} \left( k_m, i_1 \right), i_2 \right), ..., i_N \right) \qquad (5)$$

où chaque opération de génération élémentaire $CKD_{priv}$ peut être une opération de génération normale $CKD_{priv}^{n}$ ou une opération de génération renforcée $CKD_{priv}^{h}$.

De manière pratique, les indices $i$ utilisés dans les opérations de génération normale et les opérations de génération renforcée prennent leurs valeurs dans des intervalles distincts. Ainsi, les indices allant de 0 à $2^{31}$-1 sont utilisés pour générer des clés privées selon une opération de génération normale et les indices allant de $2^{31}$ à $2^{32}$ -1 sont utilisés pour générer des clés privées selon une opération de génération renforcée.

Dans tous les cas, une clé privée pourra être identifiée au moyen d'un chemin dans l'arborescence à partir de la clé maîtresse. Ainsi, par exemple, $k_m$/0/3 désignera la clé privée de seconde génération, 4ème enfant normal de la clé parent, elle-même premier enfant normal de la clé privée maîtresse. De même, $k_m$/0/3' désignera la clé privée de seconde génération, 4ème enfant renforcé de la clé parent, elle-même premier enfant normal de la clé privée maîtresse, où l'on prend pour convention $i' = i + 2^{31}$.

Les portefeuilles hiérarchiques déterministes ont fait l'objet d'une normalisation dans les documents BIP-32 et BIP-44. On pourra trouver une description détaillée des portefeuilles hiérarchiques déterministes dans l'ouvrage de A.M. Antonopoulos et G. Wood intitulé « Mastering Ethereum » publié chez O'Reilly en Déc. 2018, pp. 79-97.

Les portefeuilles hiérarchiques déterministes peuvent être stockés dans des dispositifs physiques, généralement des dispositifs personnels mobiles, par exemple des dongles. Ainsi, lorsqu'un utilisateur souhaite signer une transaction à l'aide de l'une de ses clés privées, il s'authentifie d'abord auprès de son dispositif personnel au moyen d'un code PIN (ou d'un mot de passe) pour déverrouiller son portefeuille, puis sélectionne dans le portefeuille le compte à partir duquel il veut émettre la transaction et enfin signe la transaction avec la clé privée attachée à ce compte en effectuant une action physique, par exemple en appuyant sur un bouton du dispositif personnel en question.

La structure des portefeuilles hiérarchiques déterministes a été normalisée dans la perspective d'une émission épisodique de transactions basées sur des crypto-devises. La structure d'un chemin dans l'arborescence du portefeuille obéit ainsi à un format adapté à ce cas d'usage, défini dans le document BIP-44 par :

m/purpose'/coin_type'/account'/change/address_index

où le champ « m » est relatif à la clé maitresse, le champ « purpose » est relatif au standard considéré (ici la valeur 44 pour BIP-44), le champ « coin_type » spécifie la crypto-devise utilisée, le champ « account » spécifie un compte à partir duquel l'utilisateur peut subdiviser son portefeuille en sous-comptes, le champ « change » permet de distinguer des adresses de réception (*receiving addresses*) et des adresses de solde (*change addresses*) lorsque la chaine de blocs le permet (c'est notamment le cas dans Bitcoin mais non dans Ethereum), et enfin le champ « address_index » permet à un utilisateur de distinguer ses différents comptes pour une même crypto-devise.

Nous considérerons dans la suite un portefeuille de clés hiérarchique déterministe (HD) au sens précédent, notamment un portefeuille conforme aux standards BIP-32 et BIP-44. Un tel portefeuille possède une structure arborescente dans laquelle une clé privée, associée à un nœud $v$ de l'arborescence, est générée au moyen d'une fonction de hachage à partir de la clé publique ou privée étendue associée au nœud parent de $v$ et d'un indice, $i$, donnant le rang de naissance de la clé comme décrit en relation avec les Figs. 2A et 2B.

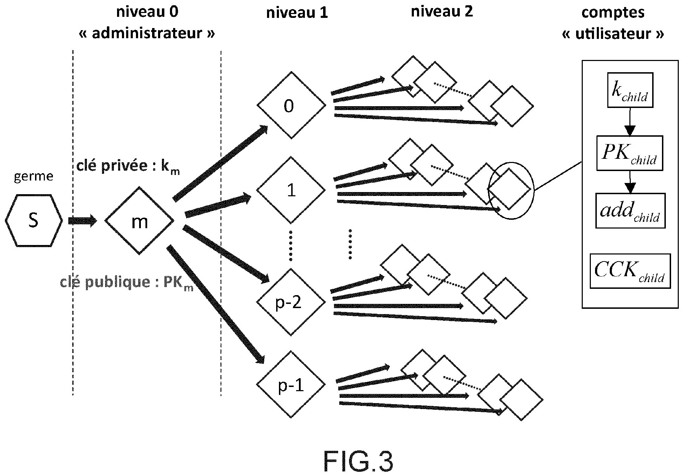

La Fig. 3 représente de manière schématique la structure d'un portefeuille de clés HD utilisé dans le cadre de la présente invention.

Le niveau « 0 » de la structure arborescente, ou racine, correspond à une clé privée maitresse, $k_m$, obtenue à partir du hachage d'un germe aléatoire (ou entropie), avantageusement codé sous la forme d'un code mnémonique. Le hachage peut être réalisé par une fonction de hachage voire une combinaison de telles fonctions. Le résultat du hachage fournit, d'une part, la clé privée maitresse et, d'autre part, un code de chaine, $CCK_m$, associé à cette même clé. La clé publique maitresse, $PK_m$, est obtenue à partir de la clé privée maitresse au moyen d'un algorithme de cryptographie asymétrique (par exemple $PK_m = k_m.G$ pour un algorithme de cryptographie sur courbe elliptique).

Au niveau « 0 » de la structure arborescente est créé un compte administrateur, dont l'accès est protégé par un élément d'authentification administrateur (code PIN ou mot de passe administrateur).

Le compte administrateur est associé à la clé privée maitresse, $k_m$, ainsi qu'à la clé publique maitresse cor-respondante, $PK_m = k_m.G$, et est identifié par un identifiant du compte administrateur ($login_{adm}$) et/ou un code PIN ou mot de passe.

A partir de la clé maîtresse peuvent être créées (ici selon une génération normale) $p$ clés enfants de rang 1, notées $k_m$|0, $k_m$|1, $k_m$|2,...$k_m$|$p$-1 selon la convention indiquée précédemment, chacune de ces clés pouvant à son tour permettre de générer des clés enfants de rang 2, etc.

Si l'on considère maintenant un compte associé à une feuille de l'arborescence du portefeuille HD, indexée par un chemin d'indices $i_1,...,i_N$ dans le portefeuille et que l'on note $k_{leaf}$ la clé privée correspondant qui a été générée au moyen du processus itératif donné par l'expression (5), la clé publique associée à ce compte est obtenue, dans le cas d'un cryptosystème sur courbe elliptique, par $PK_{leaf} = k_{leaf}.G$ et l'adresse du compte n'est autre que $add_{leaf} =$

*Hash*($PK_{leaf}$) où *Hash* est une fonction de hachage ou une combinaison de fonctions de hachage. Par exemple, on pourra prendre la fonction *keccack256* comme fonction de hachage pour l'obtention d'une adresse de compte Ethereum et la combinaison des fonctions *sha*256 et *ripemed*160 pour l'obtention d'une adresse de compte Bitcoin, de manière connue en soi.

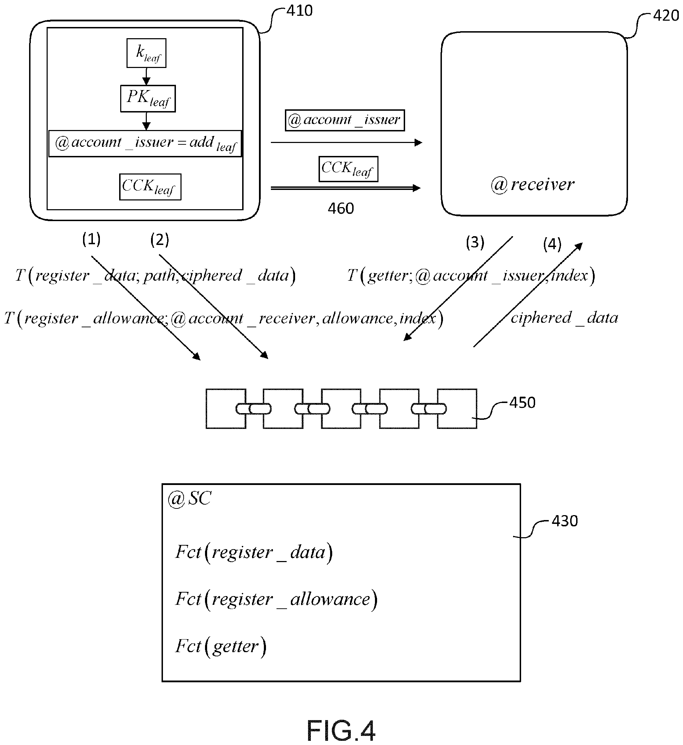

La Fig. 4 représente les échanges intervenant dans la méthode de divulgation sélective entre utilisateurs d'une chaine de blocs, selon un mode de réalisation de la présente invention.

On a représenté en 410 le portefeuille de clés d'un premier utilisateur d'une chaine de blocs, 450, souhaitant divulguer des informations confidentielles (par exemple des informations personnelles) à un second utilisateur, 420.

On suppose que le portefeuille de clés 410 est de type hiérarchique déterministe comme décrit précédemment, les clés de l'arborescence ayant été générées des opérations de génération normale et/ou des opérations de génération renforcée.

Les notations de la Fig. 3 ont été conservées, autrement dit $k_{leaf}$ est une clé privée associée à une feuille de l'arborescence, $PK_{leaf} = k_{leaf}.G$ est la clé publique correspondante, et $add_{leaf} = Hash(PK_{leaf})$ est l'adresse du compte associé à la clé publique en question. Par ailleurs, le code de chaine généré à partir du hachage de la clé publique étendue (ou de la clé privée étendue dans le cas d'une opération de génération renforcée) du nœud parent de cette feuille est noté $CCK_{leaf}$.

Lorsque le premier utilisateur souhaite divulguer de manière sélective des données, *data*, à partir de son compte utilisateur d'adresse $add_{leaf}$, il les chiffre au moyen d'un algorithme de chiffrement symétrique (AES, DES, Triple DES par exemple) utilisant $CCK_{leaf}$ comme clé secrète.

Il transmet ces données ainsi chiffrées, *ciphered _data* à un contrat intelligent (*smart contract*), 430, préalablement déployé sur la chaine de blocs.

Plus précisément, dans un premier temps, il envoie à l'adresse @*SC* de ce contrat intelligent, une première transaction à partir de son adresse publique ou EOA (*Externally Owned Account*), *account_issuer* = $add_{leaf}$ et la signe au moyen de sa clé privée $k_{leaf}$.

A la réception, le contrat intelligent *SC* vérifie à partir de la signature si la transaction a bien été émise par l'adresse publique EOA. Plus précisément, le contrat intelligent peut déduire des composantes de la signature et de l'adresse de compte de l'émetteur ayant émis la transaction, si cette dernière a bien été signée par la clé privée spécifique. Le contrat intelligent authentifie ainsi l'émetteur.

Après avoir authentifié l'émetteur et s'être assuré que les différents arguments d'entrée remplissent bien les conditions spécifiées dans le contrat, le contrat intelligent exécute la fonction appelée (encore dénommée méthode).

Une transaction émise par l'adresse de compte émetteur de l'utilisateur peut se présenter sous la forme générale suivante :

*Transaction : {*

  *'from' : @account_issuer*

  *'to' : @smart_contract_address*

  *'data' : IDmethod & arguments*

  *}*

  *signée par private_key_issuer*

dans laquelle :

- @*account_issuer* représente l'adresse de compte de l'émetteur (EOA) à partir de laquelle la transaction est émise. Cette adresse publique est obtenue par hachage de la clé publique correspondant à la clé privée spécifique, comme expliqué plus haut ;
- @*smart_contract_address* représente l'adresse du contrat intelligent déployé sur la chaine de blocs ;
- *IDmethod* & *arguments* représentent respectivement la fonction (la méthode) du contrat intelligent appelée par la transaction et les arguments en entrée ;
- *private_key_issuer* désigne la clé privée spécifique.

La première transaction a été représentée en Fig. 4 par :

$$T\left(register\_data, path, ciphered\_data\right) \qquad\qquad (6)$$

dans laquelle l'adresse du compte émetteur ( *account_issuer* ) et l'adresse du contrat intelligent ont été omises par souci de simplification. Le paramètre *register_data* est le nom de la méthode appelée par la transaction dans le contrat intelligent, les données *ciphered_data* représentent les données chiffrées et le paramètre *path* indique un chemin de l'arborescence (par exemple $k_m/0/3$) permettant d'identifier et de reconstruire la clé de chiffrement de ces données.

Un exemple de première transaction est donné ci-après :

```
transaction_issuer {

    from : account_issuer

    to : smart_contract_address

    data : serialize {

        method (4 bytes) register_data

        path registration

        data ciphered using "chaincode" key with a symmetric ciphering function

    }

}
```

Différentes premières transactions peuvent être émises de différents comptes d'un même utilisateur. La structure d'un enregistrement de données chiffrées dans le registre distribué peut être représentée par une table faisant correspondre à chaque compte de l'utilisateur des données chiffrées. Le cas échéant, différentes données chiffrées associées à un même compte peuvent être stockées dans le registre distribué à une adresse mémoire indexée, l'index s'incrémentant à chaque nouvel enregistrement, par exemple :

Table I

| account_issuer | Index | ciphered data |
|---|---|---|
| 0x1fe4...34a9 | 3 | 0x35a85ec1a0...3b4e2aff |
| 0x1fe4...34a9 | 17 | 0xb5e280ad3f...a4c67fb5 |
| 0x48cf...b21e | 11 | 0xc43a9dc50e...b62a3ec9 |

On comprend de la table I (deux premières lignes) que des informations chiffrées sont stockées pour un même compte d'utilisateur sous des index différents. En outre, l'utilisateur peut utiliser différents comptes issus de son portefeuille de clés HD pour stocker des informations chiffrées correspondant à des données en clair différentes ou identiques (mode diffusion). On comprendra que des données chiffrées issues de deux comptes différents sont chiffrées avec des clés différentes et sont par conséquent différentes même si les données en clair sont identiques.

Il est important de noter que le paramètre *path* peut être avantageusement stocké dans la chaine de blocs par le contrat intelligent. Ainsi, le premier utilisateur n'a pas à stocker le code de chaine $CCK_{leaf}$ dans le portefeuille de clés, il peut reconstruire cette clé secrète de manière dynamique en cas de besoin à partir du chemin, après avoir lu le paramètre *path* dans la chaine de blocs (par exemple au moyen d'un appel d'une fonction *getter* dans le contrat intelligent).

Dans un second temps, le premier utilisateur envoie une seconde transaction à l'adresse @*SC* à partir de son adresse publique *account_issuer* et la signe comme la première au moyen de sa clé privée $k_{leaf}$. Le contrat intelligent *SC* vérifie comme précédemment à partir de la signature si la transaction a bien été émise par l'adresse publique *account_issuer* .

La seconde transaction a été représentée en Fig. 4 par :

$$T\left(register\_allowance; @ account\_receiver, allowance, index\right) \qquad (7)$$

dans laquelle l'adresse du compte émetteur ( account _issuer ) et l'adresse du contrat intelligent, @SC, ont été là encore omises par souci de simplification. Le paramètre register_allowance est le nom de la méthode appelée par la transaction dans le contrat intelligent, @account _receiver désigne le compte du destinataire, allowance est un jeton d'accès (par exemple selon la convention du token ERC-20) et index indique l'emplacement mémoire où sont stockées les données chiffrées dans le registre distribué.

Cette seconde transaction permet d'enregistrer un droit d'accès (représenté par le jeton d'accès allowance) en faveur d'un utilisateur destinataire, identifié par son compte utilisateur @account _receiver . Un exemple de seconde transaction est donné ci-après :

```
transaction_issuer {

    from : account_issuer

    to : smart_contract_address

    data : serialize {

        method (4 bytes) register_allowance

        account_receiver

        allowance

        index authorized data

    }

}
```

Différents comptes d'un utilisateur émetteur peuvent octroyer des droits d'accès à un même compte d'utilisateur destinataire pour accéder à des données chiffrées stockées à des emplacements mémoire d'index différents, par exemple :

Table II

| account_issuer | account_receiver | Allowance | Index |
|---|---|---|---|
| 0x1fe4...34a9 | 0x4f10...a749 | 1 | 17 |
| 0x1fe4...34a9 | 0x48cf...b21e | 1 | 3 |
| 0x48cf...b21e | 0xc5ab...0749 | 1 | 11 |

Dans cet exemple, le compte émetteur 0x1fe4...34a9 autorise le compte destinataire 0x4f10...a749 à accéder une fois à la donnée chiffrée enregistrée sous l'index 17 ; le compte émetteur 0x1fe4...34a9 autorise le compte destinataire 0x48cf...b21e à accéder une fois à la donnée chiffrée enregistrée sous l'index 3; le compte émetteur 0x48cf...b21e autorise le compte destinataire 0xc5ab...0749 à accéder une fois à la donnée chiffrée enregistrée sous l'index 11.

Lorsque les droits d'accès ont été enregistrés dans la chaine de blocs, l'utilisateur destinataire peut accéder aux données chiffrées en envoyant, à partir de son adresse publique account _receiver , une troisième transaction à l'adresse du contrat intelligent, @SC . Le destinataire signe cette transaction au moyen de sa clé privée et le contrat intelligent SC vérifie à partir de la signature si la transaction a bien été émise par l'adresse publique account _receiver .

La troisième transaction a été représentée en Fig. 4 par :

$$T\left(getter; @ account\_issuer, index\right) \qquad (8)$$

dans laquelle l'adresse du compte destinataire ( *account _receiver* ) et l'adresse du contrat intelligent, *@SC* , ont été omises par souci de simplification. Le paramètre *getter* est le nom de la méthode appelée par la troisième transaction dans le contrat intelligent, et *@account _issuer* a la même signification que précédemment, c'est à dire désigne le compte de l'utilisateur ayant stocké des données confidentielles chiffrées à son intention. La méthode *getter* vérifie si le compte *@account _issuer* a bien provisionné le jeton représentant le droit d'accès *allowance* pour le destinataire lui autorisant l'accès aux données chiffrées, stockées sous l'index correspondant à ce jeton. En cas de succès, le droit d'accès est épuisé et la méthode *getter* retourne les données chiffrées à l'utilisateur destinataire, 420. L'utilisation d'un droit d'accès conduit alors à une péremption du jeton d'accès « *allowance* ».

Par exemple dans l'exemple donné dans la table II, après que le compte d'utilisateur destinataire 0xc5ab...0749 a accédé aux données chiffrées du compte d'utilisateur émetteur 0x48cf...b21e stockées sous l'index 11, le jeton d'accès *allowance* est mis à zéro et, par conséquent, un nouvel accès à ces données chiffrées est prohibé.

La troisième transaction permet à l'utilisateur destinataire de récupérer les données confidentielles stockées à son intention par l'utilisateur émetteur. Un exemple de troisième transaction est donné ci-après :

*transaction_receiver {*

*from : account_receiver*

*to : smart_contract_address*

*data : serialize {*

　　*method (4 bytes) getter*

　　*account_issuer*

　　*index*

*}*

L'utilisateur destinataire peut ensuite déchiffrer les données reçues du contrat intelligent au moyen de la clé secrète $CCK_{leaf}$.

Pour pouvoir interagir avec la chaine de blocs et récupérer les données chiffrées, l'utilisateur destinataire devra avoir préalablement reçu l'adresse publique, *@account_issuer* , du compte utilisateur de l'émetteur.

Par exemple, dans le cas d'une exploitation face à face, l'émetteur pourra présenter au destinataire un QR code représentant l'adresse *@account _issuer* de ce compte utilisateur et le destinataire obtiendra cette adresse en scannant ce QR code de manière connue en soi. Dans le cas d'une exploitation distante, le destinataire pourra obtenir cette adresse par transmission via un canal sécurisé ou non, ou encore en consultant une base de données.

En outre, pour déchiffrer les données reçues du contrat intelligent, le destinataire doit disposer de la clé secrète, $CCK_{leaf}$. Celle-ci pourra être transmise par l'émetteur au destinataire au moyen d'un canal auxiliaire sécurisé, 460, par exemple un canal de communication à courte portée tel qu'un canal de communication NFC ou un canal de communication par ultrasons.

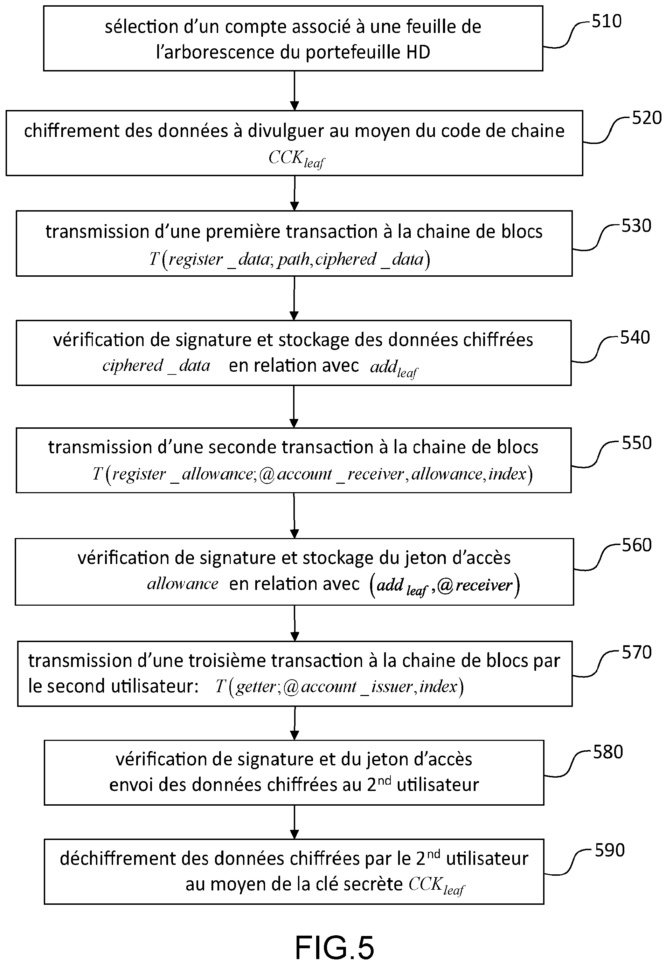

La Fig. 5 représente l'ordinogramme d'une méthode de divulgation sélective d'information entre utilisateurs d'une chaine de blocs, selon un mode de réalisation de la présente invention.

Dans une première étape, 510, le premier utilisateur, disposant d'un portefeuille HD de clés sélectionne une feuille de l'arborescence comme compte émetteur. A ce compte utilisateur sont associées, une clé privée $k_{leaf}$, une adresse de compte, $add_{leaf}$, obtenue par hachage de la clé publique, $PK_{leaf}$, ainsi qu'un code de chaine, $CCK_{leaf}$.

A l'étape 520, le premier utilisateur chiffre les données qu'il souhaite divulguer de manière sélective au second utilisateur, au moyen d'un algorithme de chiffrement symétrique, utilisant comme clé secrète le code de chaine $CCK_{leaf}$ .

A l'étape 530, le premier utilisateur transmet à la chaine de blocs une première transaction, $T_1$ , à partir de son adresse de compte $add_{leaf}$ à l'adresse d'un contrat intelligent déployé sur la chaine de blocs, *@SC* , la transaction $T_1$ ayant pour argument les données précédemment chiffrées, *ciphered _data,* ainsi que l'appel à une première fonction du contrat intelligent, *register _data* . Cette transaction comporte en outre en argument le chemin de l'arborescence permettant d'identifier et de reconstruire la clé de chiffrement. La transaction $T_1$ est signée à l'aide de la clé privée $k_{leaf}$ du compte utilisateur.

A l'étape 540, la première fonction du contrat intelligent vérifie à l'aide de cette signature que la transaction $T_1$ a bien été émise par l'adresse de compte $add_{leaf}$, et, dans l'affirmative, la première fonction du contrat stocke dans la chaine de blocs les données chiffrées, *ciphered _data* en relation avec l'adresse $add_{leaf}$ . Lorsqu'un index (*index*) est présent, les données chiffrées sont également stockées en relation avec cet index.

A l'étape 550, le premier utilisateur transmet à la chaine de blocs une seconde transaction, $T_2$ , à partir de son adresse de compte $add_{leaf}$ à l'adresse du contrat intelligent, la transaction $T_2$ ayant pour argument, l'adresse de compte du second utilisateur, *@receiver* , un jeton d'accès (représentant un droit d'accès), *allowance,* ainsi que l'appel à une seconde fonction du contrat intelligent, *register_allowance* . Optionnellement, la transaction $T_2$ pourra comporter l'index indiquant l'emplacement mémoire de la donnée dans le registre distribué (*ledger*) comme argument supplémentaire. La transaction $T_2$ est signée à l'aide de la clé privée $k_{leaf}$ du compte utilisateur.

A l'étape 560, la seconde fonction du contrat intelligent vérifie à l'aide de cette signature que la transaction $T_2$ a bien été émise par l'adresse de compte $add_{leaf}$ et, dans l'affirmative, la seconde fonction du contrat stocke dans la chaine de blocs le jeton d'accès, *allowance,* en relation avec le couple formé par l'adresse du compte émetteur et l'adresse du compte récepteur, ($add_{leaf}$,*@receiver*). Lorsqu'un index est présent, le jeton d'accès est également stocké en relation avec cet index.

A l'étape 570, le second utilisateur transmet à la chaine de blocs une troisième transaction, $T_3$ , à partir de son adresse de compte *@receiver,* à l'adresse du contrat intelligent *@receiver* . Cette transaction comprend en argument l'adresse du compte émetteur du premier utilisateur, $add_{leaf}$, qui aura été préalablement transmise au second utilisateur par le premier utilisateur, ainsi que, le cas échéant, l'index de la donnée autorisée à être lue dans le registre distribué ainsi que l'appel à une troisième fonction du contrat intelligent, *getter* . Le second utilisateur signe cette transaction à l'aide de sa clé privée associée à son adresse de compte *@receiver* .

A l'étape 580, la troisième fonction du contrat intelligent vérifie à l'aide de cette signature que la transaction $T_3$ a bien été émise par l'adresse de compte *@receiver* et que le crédit d'accès, *allowance,* stocké en relation avec le couple ($add_{leaf}$,*@receiver*) n'est pas nul. Lorsque ces deux conditions sont vérifiées, le contrat intelligent retourne à cette adresse, les données chiffrées *ciphered_data* stockées en relation avec l'adresse $add_{leaf}$ et, le cas échéant, la valeur de l'index. Le jeton d'accès *allowance* est alors invalidé, autrement dit le crédit d'accès est alors mis à zéro, de sorte qu'une nouvelle tentative d'accès du second utilisateur aux données chiffrées sera infructueuse.

Enfin à l'étape 590, le second utilisateur déchiffre les données chiffrées *ciphered_data* au moyen de la clé secrète, $CCK_{leaf}$, après l'avoir reçue du premier utilisateur via un canal sécurisé.

Dans le mode de réalisation décrit en relation avec les Figs. 4 et 5, la clé secrète est directement donnée par le code de chaine $CCK_{leaf}$ fournie par une feuille de l'arborescence du portefeuille HD. De manière plus générale, la clé secrète pourra être obtenu au moyen d'une opération sur ce code de chaine. Ainsi, selon une variante, la clé secrète pourra résulter d'une opération de contextualisation de ce code de chaine. Par exemple, un indice de contexte (géographie, d'usage ou lié au destinataire par exemple) pourra être concaténé à $CCK_{leaf}$ et l'ensemble concaténé pourra être haché pour fournir la clé secrète.

L'homme du métier comprendra que la méthode de divulgation sélective de données entre les deux utilisateurs ne nécessite pas de protocole d'échange complexe entre eux, le transfert de ces données étant sécurisé et intermédié par un contrat intelligent déployé sur la chaine de blocs. Quand bien même le second utilisateur obtiendrait frauduleusement la clé secrète, il ne pourrait obtenir les données chiffrées si un crédit d'accès ne lui pas été alloué par le premier utilisateur. En outre, le premier utilisateur n'a pas à calculer, stocker et maintenir des clés secrètes en sus de son portefeuille de clés HD.

**Revendications**

1. Méthode de divulgation sélective de données par un premier utilisateur d'une chaine de blocs à un second utilisateur de cette chaine de blocs, le premier utilisateur étant équipé d'un portefeuille de clés hiérarchique déterministe organisé selon structure arborescente à partir d'une clé maitresse, **caractérisée en ce que** :

   a) le premier utilisateur sélectionne (510) une feuille de la structure arborescente comme compte émetteur, ladite feuille étant identifiée par un chemin dans l'arborescence, le compte émetteur étant associé à une clé privée, $k_{leaf}$, une clé publique correspondante, $PK_{leaf}$ , une adresse de compte émetteur, $add_{leaf}$, obtenue par hachage de la clé publique et un code de chaine, $CCK_{leaf}$ ;
   b) le premier utilisateur chiffre (520) lesdites données au moyen d'une clé secrète obtenue à partir du code de chaine, $CCK_{leaf}$ ;
   c) le premier utilisateur transmet (530) une première transaction à partir de son adresse de compte émetteur $add_{leaf}$ , à un contrat intelligent déployé sur la chaine de blocs, la première transaction ayant pour argument les données ainsi chiffrées ainsi qu'un appel à une première fonction du contrat intelligent ;
   d) la première fonction du contrat intelligent (540) stocke dans la chaine de blocs les données ainsi chiffrées en relation avec l'adresse de compte émetteur du premier utilisateur, $add_{leaf}$ ;
   e) le premier utilisateur transmet (550) au dit contrat intelligent, une seconde transaction à partir de son adresse de compte émetteur, $add_{leaf}$, la seconde transaction ayant pour argument l'adresse de compte du second utilisateur, un jeton d'accès, ainsi qu'un appel à une seconde fonction du contrat intelligent ;

f) la seconde fonction du contrat intelligent (560) stocke dans la chaine de blocs le crédit d'accès en relation avec le couple formé par l'adresse de compte émetteur du premier utilisateur et l'adresse de compte récepteur du second utilisateur ;

g) le second utilisateur transmet (570) au dit contrat intelligent, une troisième transaction, à partir de son adresse de compte récepteur, la troisième transaction ayant pour argument l'adresse du compte émetteur du premier utilisateur ainsi qu'un appel à une troisième fonction du contrat intelligent ;

h) la troisième fonction du contrat intelligent vérifie (580) que le jeton d'accès stocké en relation avec le couple formé par l'adresse de compte émetteur du premier utilisateur et l'adresse de compte récepteur du second utilisateur est valide et, dans ce cas, retourne à l'adresse de compte récepteur du second utilisateur, les données chiffrées stockées en relation avec l'adresse de compte émetteur du premier utilisateur, $add_{leaf}$ .

2. Méthode de divulgation sélective de données selon la revendication 1, **caractérisée en ce que** le premier utilisateur transmet au second utilisateur l'adresse du compte émetteur, $add_{leaf}$ .

3. Méthode de divulgation sélective de données selon la revendication 1 ou 2, **caractérisée en ce que** la clé secrète est transmise au second utilisateur via un canal auxiliaire sécurisé.

4. Méthode de divulgation sélective de données selon la revendication 3, **caractérisée en ce que** le canal auxiliaire sécurisé utilise une communication NFC ou une communication par ultrasons.

5. Méthode de divulgation sélective de données selon l'une des revendications précédentes, **caractérisée en ce que** la clé secrète est identique au code de chaine, $CCK_{leaf}$.

6. Méthode de divulgation sélective de données selon l'une des revendications 3 à 5, **caractérisée en ce qu'**après l'étape (h), le second utilisateur déchiffre les données chiffrées avec la clé secrète préalablement reçue via le canal auxiliaire sécurisé.

7. Méthode de divulgation sélective de données selon l'une des revendications précédentes, **caractérisée en ce qu'**à l'étape (c), le premier utilisateur signe la première transaction avec la clé privée $k_{leaf}$ et qu'à l'étape (d), la première fonction du contrat intelligent vérifie à l'aide de cette signature si la première transaction a bien été émise par l'adresse de compte émetteur du premier utilisateur, $add_{leaf}$, les données chiffrées n'étant stockées dans la chaine de blocs que si cette vérification est positive.

8. Méthode de divulgation sélective de données selon l'une des revendications précédentes, **caractérisée en ce qu'**à l'étape (e), le premier utilisateur signe la seconde transaction avec la clé privée $k_{leaf}$ et qu'à l'étape (f), la seconde fonction du contrat intelligent vérifie à l'aide de cette signature si la seconde transaction a bien été émise par l'adresse de compte émetteur du premier utilisateur, $add_{leaf}$, le jeton d'accès n'étant stocké dans la chaine de blocs que si cette vérification est positive.

9. Méthode de divulgation sélective de données selon l'une des revendications précédentes, **caractérisée en ce qu'**à l'étape (g), le second utilisateur signe la troisième transaction avec la clé privée associée à son compte récepteur et qu'à l'étape (h), la troisième fonction du contrat intelligent vérifie à l'aide de cette signature si la troisième transaction a bien été émise par l'adresse de compte récepteur du second utilisateur, les données chiffrées n'étant mises à disposition de cette adresse que si cette vérification est positive.

10. Méthode de divulgation sélective de données selon l'une des revendications précédentes, **caractérisée en ce qu'**à l'étape (h) le jeton d'accès est invalidé par la troisième fonction du contrat intelligent après que les données chiffrées ont été transmises à l'adresse de compte récepteur du second utilisateur.

11. Méthode de divulgation sélective de données selon l'une des revendications précédentes, **caractérisée en ce qu'**à l'étape (c), la première transaction comprend en outre ledit chemin dans l'arborescence en argument et que celui-ci est stocké dans la chaine de blocs par le contrat intelligent.

12. Méthode de divulgation sélective de données selon la revendication 11, **caractérisée en ce qu'**à l'étape (e), la seconde transaction comporte en outre un index en argument, le jeton d'accès étant stocké à l'étape (f) en relation avec le couple du compte émetteur du premier utilisateur et du compte récepteur du second utilisateur, d'une part, et dudit index, d'autre part.

13. Méthode de divulgation sélective de données selon la revendication 12, **caractérisée en ce qu'**à l'étape (h), la troisième fonction du contrat intelligent vérifie que le jeton d'accès stocké en relation, d'une part, avec le couple formé par l'adresse de compte émetteur du premier utilisateur et l'adresse de compte récepteur du second utilisateur, et d'autre part, avec ledit index, est bien valide et, dans l'affirmative, ladite troisième fonction met à disposition de l'adresse du compte récepteur du second utilisateur, les données chiffrées stockées en relation avec l'adresse de compte émetteur du premier utilisateur, $add_{leaf}$, et ledit index.

FIG.1

FIG.2A

FIG.2B

FIG.3

410

$k_{leaf}$

$PK_{leaf}$

$@ account\_issuer = add_{leaf}$

$CCK_{leaf}$

420

$@account\_issuer$

$CCK_{leaf}$

460

$@ receiver$

(1)        (2)

(3)        (4)

$T(register\_data; path, ciphered\_data)$        $T(getter; @account\_issuer, index)$

$T(register\_allowance; @account\_receiver, allowance, index)$        $ciphered\_data$

450

$@SC$

$Fct(register\_data)$

$Fct(register\_allowance)$

$Fct(getter)$

430

FIG.4

sélection d'un compte associé à une feuille de l'arborescence du portefeuille HD — 510

chiffrement des données à divulguer au moyen du code de chaine $CCK_{leaf}$ — 520

transmission d'une première transaction à la chaine de blocs $T(register\_data; path, ciphered\_data)$ — 530

vérification de signature et stockage des données chiffrées $ciphered\_data$ en relation avec $add_{leaf}$ — 540

transmission d'une seconde transaction à la chaine de blocs $T(register\_allowance; @account\_receiver, allowance, index)$ — 550

vérification de signature et stockage du jeton d'accès $allowance$ en relation avec $(add_{leaf}, @receiver)$ — 560

transmission d'une troisième transaction à la chaine de blocs par le second utilisateur: $T(getter; @account\_issuer, index)$ — 570

vérification de signature et du jeton d'accès envoi des données chiffrées au $2^{nd}$ utilisateur — 580

déchiffrement des données chiffrées par le $2^{nd}$ utilisateur au moyen de la clé secrète $CCK_{leaf}$ — 590

## FIG.5

EP 4 012 972 A1

Europäisches Patentamt / European Patent Office / Office européen des brevets

# RAPPORT DE RECHERCHE EUROPEENNE

Numéro de la demande

EP 21 21 4488

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | RAHMAN MOHSIN UR ET AL: "Protecting Personal Data Using Smart Contracts", INTERNET AND DISTRIBUTED COMPUTING SYSTEMS. IDCS 2019, vol. 11874, 10 novembre 2019 (2019-11-10), pages 21-32, XP047526707, DOI: 10.1007/978-3-030-34914-1_3 | 1,2,5, 7-13 | INV. H04L9/08 H04L9/30 |
| A | * section 3 * | 3,4,6 | |
| X | STEICHEN MATHIS ET AL: "Blockchain-Based, Decentralized Access Control for IPFS", 2018 IEEE INTERNATIONAL CONFERENCE ON INTERNET OF THINGS (ITHINGS) AND IEEE GREEN COMPUTING AND COMMUNICATIONS (GREENCOM) AND IEEE CYBER, PHYSICAL AND SOCIAL COMPUTING (CPSCOM) AND IEEE SMART DATA (SMARTDATA), IEEE, 30 juillet 2018 (2018-07-30), pages 1499-1506, XP033556149, DOI: 10.1109/CYBERMATICS_2018.2018.00253 | 1,2,5, 7-13 | |
| Y | * sections II.B. et III.B. * | 3,4,6 | DOMAINES TECHNIQUES RECHERCHES (IPC) |
| X | Milosevic Aleksa: "Storing and passing encrypted data to another owner", Ethereum Stack Exchange, 20 avril 2018 (2018-04-20), XP055835624, Extrait de l'Internet: URL:https://ethereum.stackexchange.com/questions/31355/storing-and-passing-encrypted-data-to-another-owner [extrait le 2021-08-27] | 1,2,5, 7-13 | H04L |
| Y | * pages 2,3 * | 3,4,6 | |

Le présent rapport a été établi pour toutes les revendications

| Lieu de la recherche | Date d'achèvement de la recherche | Examinateur |
|---|---|---|
| Munich | 6 avril 2022 | Billet, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

18

**EP 4 012 972 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3076420 A

**Littérature non-brevet citée dans la description**

- **A.M. ANTONOPOULOS ; G. WOOD.** Mastering Ethereum. O'Reilly, Décembre 2018, 79-97